# EUROPÄISCHE PATENTANMELDUNG

(11) **EP 3 020 965 A1**
(43) Veröffentlichungstag der Anmeldung: **18.05.2016**
(21) Anmeldenummer: 14193233.5
(22) Anmeldetag: 14.11.2014
(51) Int. Cl.: F03D 15/00, F16H 57/01

(54) **Windgetriebe, Verwendung, Verfahren**

(71) Anmelder: Siemens Aktiengesellschaft, 80333 München (DE)
(72) Erfinder: Meyer, Thomas, 52223 Stolberg (DE)

(57) **Zusammenfassung**

Die vorliegende Erfindung betrifft ein Windgetriebe sowie ein Verfahren zur Übertragung von Daten in einem Windgetriebe. Das erfindungsgemäße Windgetriebe umfasst mindestens ein rotierbares Bauteil (13, 104), an welchem mindestens ein Sensor (301) zur Erfassung von Sensormessdaten sowie ein RFID-Transponder (302) angeordnet sind. Der Sensor (301) ist durch eine Übertragungsleitung (303) zur Übertragung von Sensormessdaten mit dem RFID-Transponder (302) verbunden.

## Beschreibung

Die vorliegende Erfindung betrifft ein Windgetriebe sowie ein Verfahren zur Übertragung von Daten in einem Windgetriebe.

WO 2011/047089 A1 (Baker et al.) 21.04.2011 beschreibt ein System einer Windkraftanlage (= WKA) mit einer WKA-Welle, auf welcher mindestens ein Sensor, z.B. ein Dehnungsmessstreifen, zur Messung einer in der Welle auftretenden Scherspannung angeordnet ist. Ein operativ mit dem Sensor gekoppelter Leistungsübertrager umfasst eine erste, auf der Welle angeordnete Komponente und eine zweite, entfernt von der Welle angeordnete Komponente. Dabei ist die zweite Komponente so positioniert, dass sie während einer Rotation der Welle zu der ersten Komponente Leistung kontaktlos übertragen kann. Die kontaktlose Verbindung kann mittels RFID realisiert sein.

Der vorliegenden Erfindung liegt die Aufgabe zugrunde, in einem Windgetriebe eine Datenübertragung zu realisieren, um von einem Sensor erfasste Messwerte von einem rotierenden Bauteil zu einem feststehenden Bauteil des Windgetriebes zu übertragen.

Die Aufgabe wird gelöst durch ein Windgetriebe gemäß Anspruch 1, eine Verwendung gemäß Anspruch 10 sowie ein Verfahren gemäß Anspruch 11.

Das erfindungsgemäße Windgetriebe umfasst mindestens ein rotierbares Bauteil. An dem rotierbaren Bauteil sind mindestens ein Sensor zur Erfassung von Sensormessdaten sowie mindestens ein RFID-Transponder angeordnet. Dabei ist der Sensor durch eine Übertragungsleitung zur Übertragung von Sensormessdaten mit dem RFID-Transponder verbunden.

Die erfindungsgemäße Verwendung einer RFID-Schnittstelle dient einer Übertragung von Sensormessdaten von einem rotierenden Bauteil zu einem feststehenden Bauteil eines Windgetriebes.

Das erfindungsgemäße Verfahren zur Übertragung von Sensormessdaten von einem rotierenden Bauteil zu einem feststehenden Bauteil eines Windgetriebes, vorzugsweise eines Planetengetriebes, umfasst folgende Schritte: Sensormessdaten werden von einem an dem rotierenden Bauteil angeordneten Sensor erfasst; die Sensormessdaten werden von dem Sensor über eine Übertragungsleitung zu einem an dem rotierenden Bauteil angeordneten RFID-Transponder übertragen; die Sensormessdaten werden von dem RFID-Transponder zu einem an dem feststehenden Bauteil angeordneten Lesegerät übertragen.

Der Erfindung liegt die Erkenntnis zugrunde, dass die RFID-Technologie im Bereich der Windgetriebe vorteilhaft einsetzbar ist, insbesondere aufgrund der Möglichkeit, RFID-Systeme ohne eine kontinuierliche Spannungsversorgung zu betreiben.

Der Vorteil der vorliegenden Erfindung liegt im Einsatz neuer Technologien wie RFID in Windgetrieben. Dadurch kann eine kabellose Messdatenübertragung ohne Spannungsversorgung für das bewegte System erreicht werden. Von Vorteil ist dabei, dass keine Spannungsversorgung im rotierenden System notwendig und eine integrierte Bauweise möglich ist. Durch die einfache Anwendung der Erfindung, u.a. auch bei Nachrüstung bestehender Windgetriebe, ist die Erfindung sehr kostengünstig realisierbar. Insbesondere vorteilhaft ist die Unempfindlichkeit von RFID-Systemen gegenüber den in Getrieben herrschenden Umgebungsbedingungen, insbesondere gegenüber Schmierstoffen wie Schmieröl und Wärme.

Die Erfindung bezieht sich insbesondere auf die Zustandsüberwachung eines Lagers auf einem rotierenden System. Dies kann die Temperaturüberwachung von Wälzlagern bzw. Gleitlager auf einer Planetenradachse von Planetengetrieben betreffen, wobei die Planetenradachse in einem drehbar gelagerten Planetenträger nicht-drehbar fixiert ist.

Ein Windgetriebe, auch WKA-Getriebe genannt, ist ein in einer Windkraftanlage (= WKA) eingesetztes Getriebe, um die Rotordrehzahl in eine Generatordrehzahl zu übersetzen. Ein Windgetriebe kann beispielsweise eine oder mehrere Planetenradstufen und/oder eine oder mehrere Stirnradstufen aufweisen. Ein Windgetriebe kann aber auch andere Getriebestufen wie z.B. Kegelradstufen aufweisen. Ein Windgetriebe umfasst rotierbare und feststehende Bauteile, die sich beim Betrieb des Getriebes relativ zueinander bewegen, insbesondere rotieren. Die feststehenden Bauteile sind insbesondere in Bezug auf eine die Windkraftanlage tragende Gondel feststehend. Im Falle eines Planetengetriebes kann z.B. ein Planetenträger ein rotierbares Bauteil sein, wohingegen ein Getriebegehäuse ein feststehendes Bauteil darstellt. Rotierbare Bauteile wie ein Planetenträger sind in der Regel mittels Lagern wie Wälz- und/oder Gleitlagern an den feststehenden Bauteilen rotierbar gelagert. Weiterhin kann erstes rotierbares Bauteil relativ zu einem zweiten rotierbaren Bauteil rotieren, z.B. kann ein Planetenrad eines Planetengetriebes relativ zum rotierenden oder stillstehenden Planetenträger rotieren.

Während des Betriebs eines Getriebes unterliegen Getriebebauteile Einwirkungen wie Kräften, Spannungen, Beschleunigungen, Reibungswärme, etc. Derartige Einwirkungen bzw. daraus folgende Effekte können durch Sensoren gemessen bzw. erfasst und als Messwerte (Temperatur, Geschwindigkeit, Beschleunigung, Spannung, Dehnung, Spannung, Distanz, Körperschall, Ultraschall, etc.) zu einer Auswerteeinheit gesendet werden. Die Auswertung derartiger Messwerte erlaubt Aussagen über einen aktuellen Zustand des Bauteils oder des Getriebes und Voraussagen über einen künftigen Zustand des Bauteils oder des Getriebes; eine derartige Zustandsüberwachung ist unter dem Begriff "Condition Monitoring" bekannt. Eine Zustandsüberwachung eines Bauteils oder des Getriebes ermöglicht eine effektive Wartung, was zu einer besseren Leistung und einer längeren Lebensdauer des Bauteils oder des Getriebes führt. Insbesondere kann bei dem erfindungsgemäßen Windgetriebe auf einfache und zuverlässige Art und Weise die Temperatur von Wälz- und/oder Gleitlagern überwacht werden, welche der Lagerung eines Planetenrades auf einer in einem Planetenträger fixierten Planetenradachse dienen.

Die Übertragung von einem rotierbaren - und während des Betriebes rotierenden - Getriebebauteil zu einem feststehenden Getriebebauteil, und von dort zu einer Auswerteeinheit zwecks weiterer Verarbeitung der Messsignale, erfolgt erfindungsgemäß mittels eines RFID-Transponders, welcher mit einem RFID-Lesegerät (engl.: reader) wechselwirkt (RFID = Radio-Frequency Identification).

Werden auf dem rotierbaren Bauteil spannungsunabhängige Sensoren verwendet, kann im rotierbaren Bauteil gänzlich auf eine Spannungsversorgung verzichtet werden. Außerdem entfällt bei Nutzung der RFID-Technologie der Arbeitsaufwand für das Installieren einer Sende- und Empfangsantenne. Die RFID-Technologie bietet die Möglichkeit, verschiedene Sensoren bzw. Datenlogger an den RFID-Transponder und/oder das Lesegerät anzuschließen. Die Übertragung der Sensor-Messwerte zu dem RFID-Transponder erfolgt über eine Übertragungsleitung. Die Übertragungsleitung kann drahtgebunden, z.B. mittels eines Datenkabels, oder drahtlos ausgebildet sein.

Es ist möglich, dass die durch die Sensoren gemessenen Messwerte in den Sensoren zugeordneten Prozessoren weiterverarbeitet werden, bevor sie zu dem RFID-Transponder übertragen werden. Eine solche Prozessierung kann eine Filterung umfassen; dadurch kann z.B. Bandbreite für die Übertragung eingespart werden. Eine weitere Prozessierung der Daten kann in dem RFID-Transponder erfolgen, bevor die Daten über die kontaktlose Übertragungsstrecke von dem Transponder zu einem Lesegerät übertragen werden.

Vorteilhafte Ausgestaltungen und Weiterbildungen der Erfindung sind in den abhängigen Ansprüchen angegeben. Dabei kann die erfindungsgemäße Vorrichtung auch entsprechend den abhängigen Verfahrensansprüchen weitergebildet sein, und umgekehrt.

Gemäß einer bevorzugten Ausgestaltung der Erfindung umfasst das Windgetriebe außerdem mindestens ein dem RFID-Transponder zugeordnetes Lesegerät, welches so an einem feststehenden Bauteil des Windgetriebes angeordnet ist, dass ein Auslesen des mindestens einen RFID-Transponders durch das mindestens eine Lesegerät zumindest einmal während einer Rotation des rotierbares Bauteil möglich ist. Um eine Datenübertragung von dem Transponder zu dem Lesegerät sicherzustellen, muss der Abstand zwischen dem Transponder und dem Lesegerät zumindest während einer gewissen Zeitspanne pro Rotation unterhalb eines Grenzwertes liegen, wobei der Grenzwert und die Zeitspanne von dem jeweiligen verwendeten RFID-System abhängig sind. Das Lesegerät ist nur bis zu einem bestimmten Abstand von dem Transponder in der Lage, bei einer Rotation des rotierbaren Bauteils Daten, insbesondere die von den Sensoren dem Transponder übermittelten Messwerte, aus dem RFID-Transponder auszulesen. Von Vorteil ist dabei, dass das gesamte RFID-System umfassend den RFID-Transponder und das RFID-Lesegerät in das Windgetriebe integriert und somit eine kontinuierliche Zustandsüberwachung auf kurzen Zeitskalen realisierbar ist.

Es ist möglich, dass mehrere Lesegeräte an einem feststehenden Bauteil des Windgetriebes, insbesondere an einem Getriebegehäuse, positioniert sind, so dass der oder die an einem rotierbaren Bauteil, insbesondere an einem Planetenträger, angeordneten Transponder mehrmals pro Umlauf ausgelesen werden können. Von Vorteil ist dabei, dass eine höhere Abtastfrequenz realisiert werden kann.

Es ist möglich, dass ein erstes Lesegerät eine Spannung in den ein oder mehreren Transpondern induziert und ein in Umlaufrichtung hinter dem ersten angeordnetes zweites Lesegerät die Daten aus den ein oder mehreren Transpondern, die aufgrund der erhaltenen elektrischen Energie mittlerweile betriebsbereit sind, ausliest. Von Vorteil ist dabei, dass eine höhere Umlaufgeschwindigkeit des rotierbaren Bauteils relativ zu dem feststehenden Bauteil realisiert werden kann.

Gemäß einer bevorzugten Ausgestaltung der Erfindung ist das Windgetriebe ein Planetengetriebe, und das rotierbare Bauteil ein Planetenträger des Planetengetriebes mit einer darin angeordneten Planetenradachse. Dabei ist ein Planetenrad mithilfe eines Lagers, z.B. eines Wälz- und/oder eines Gleitlagers, auf der Planetenradachse rotierbar gelagert. Dabei ist die Planetenradachse in dem Planetenträger fixiert, d.h. die Rotierbarkeit des mit einem Sonnenrad und einem Hohlrad in Eingriff stehenden Planetenrads wird durch die Lagerung auf der Planetenradachse erreicht. Von Vorteil ist dabei, dass ein passiver RFID-Transponder, welcher ohne eine externe Spannungsversorgung arbeitet, die schwer zugänglichen Planetenradachsen einer Zustandsüberwachung zugänglich macht.

Gemäß einer bevorzugten Ausgestaltung der Erfindung weist das Windgetriebe zwei oder mehr Planetengetriebestufen auf, und das rotierbare Bauteil ist ein Planetenträger mit einer darin angeordneten Planetenradachse einer rotorabgewandten Planetengetriebestufe. An der WKA ist in der Regel eine Spannungsversorgung der Rotorwelle vorhanden. Dies wird mittels eines Schleifringläufers oder ähnlichem realisiert. Da die erste, rotorseitige Planetenstufe (LSS = low speed shaft) direkt mit der Rotorwelle verbunden ist, kann über die Rotorwelle die Spannungsversorgung des Planetenträgers der rotorseitigen Planetenstufe realisiert werden, auch wenn der Aufwand für die Kabelführung sehr aufwändig ist und eine unerwünschte Schnittstelle geschaffen wird. Für die zweite Planetenstufe (IMS = intermediate speed shaft) steht diese Art der Spannungsversorgung grundsätzlich nicht zur Verfügung, da der Planetenträger der zweiten Planetenstufe mit einer anderen Drehzahl rotiert als der Planetenträger der ersten Planetenstufe. Bei der IMS musste daher bisher eine Spanungsversorgung daher über Batterien mit einer eingeschränkten Betriebsdauer oder über eine Induktionsübertragung oder einen Dynamo mit einem entsprechend hohen Aufwand erfolgen. Von Vorteil ist bei der vorliegenden bevorzugten Ausgestaltung der Erfindung, dass ein passiver RFID-Transponder, welcher ohne eine externe Spannungsversorgung arbeitet, die schwer zugänglichen Planetenradachsen einer zweiten oder weiteren Planetengetriebestufe einer Zustandsüberwachung zugänglich macht.

Gemäß einer bevorzugten Ausgestaltung der Erfindung ist der Sensor in einer in der Planetenradachse eingebrachten Bohrung angeordnet, wobei die Bohrung zur Tauchschmierung der Lager des auf der Planetenradachse gelagerten Planetenrads vorgesehen ist und ein durch Eintauchen der Planetenradachse in einen Ölsumpf füllbares Ölreservoir bildet. Von Vorteil ist dabei, dass die für eine Tauchschmierung ohnehin erforderliche Bohrung in der Planetenradachse auch einen Sensor aufnimmt, der die Planetenradachse umgebende Lager überwacht.

Gemäß einer bevorzugten Ausgestaltung der Erfindung ist der Transponder an dem Planetenträger angeordnet, in dem die besagte Planetenradachse fixiert ist. Es ist möglich, dass der Transponder an einer Außenfläche des Planetenträgers fixiert, z.B. angeklebt, ist. Der RFID-Transponder ist somit in einem Bereich des rotierbaren Bauteils angeordnet, der bei einer Rotation des rotierbaren Bauteils sich entlang dem feststehenden Bauteil bewegt bzw. an diesem zumindest für eine bestimmte Zeitspanne vorbei streicht. Von dem am Planetenträger angeordneten Transponder verlaufen Übertragungsmittel, insbesondere Kabel, zu den einem oder mehreren Sensoren. Von Vorteil ist dabei, dass der Transponder durch seine exponierte Position für ein Lesegerät einfach auslesbar ist.

Gemäß einer bevorzugten Ausgestaltung der Erfindung ist das Lesegerät so an dem Getriebegehäuse angeordnet, dass bei einer Rotation des Planetenträgers der Transponder an dem Lesegerät vorbeigeführt wird. Von Vorteil ist dabei, dass der Transponder für ein Lesegerät einfach auslesbar ist.

Gemäß einer bevorzugten Ausgestaltung der Erfindung beträgt bei einer Rotation des Planetenträgers der minimale Abstand zwischen dem Transponder und dem Lesegerät weniger als 20 cm, insbesondere weniger als 10 cm. Von Vorteil ist dabei, dass durch den geringen Abstand zwischen dem Transponder und dem Lesegerät eine zuverlässige Datenübertragung gewährleistet ist.

Bevorzugt ist der RFID-Transponder ein passiver RFID-Transponder. Passive Transponder entnehmen ihre Betriebsspannung dem von dem Lesegerät eingestrahlten elektromagnetischen Feld und speichern sie für den Antwortvorgang in Kapazitäten im RFID-Transponder. Durch die RFID-Technologie mit einem passiven RFID-Transponder ist es möglich, dass keine Spannungsversorgung für das Senden der Signale von dem rotierbaren Bauteil auf das feststehende Bauteil benötigt wird.

Gemäß einer bevorzugten Ausgestaltung der Erfindung erfasst der Sensor, welcher in einer an einem Planetenträger fixierten Planetenradachse angeordnet ist, die Daten in Bezug auf ein Lager, welches zur Lagerung eines Planetenrades auf der Planetenradachse vorgesehen ist. Von dem Sensor werden die Daten zu dem an dem Planetenträger angeordneten RFID-Transponder und von dort zu dem an einem Getriebegehäuse angeordneten Lesegerät übertragen. Von Vorteil ist dabei, dass eine vollständige Datenübertragungskette von einem Sensor zu einem Lesegerät gewährleistet wird.

Im Folgenden wird die Erfindung anhand mehrerer Ausführungsbeispiele unter Zuhilfenahme der beiliegenden Zeichnung erläutert. Es zeigt jeweils schematisch und nicht maßstabsgetreu
- Fig. 1: einen Querschnitt durch ein dreistufiges Getriebe für eine Windkraftanlage;
- Fig. 2: einen Längsschnitt durch einen Planetenträger mit einem gleitgelagerten Planetenrad;
- Fig. 3: einen Schnitt durch eine Planetenradachse mit darin angeordneten Sensoren und einem RFID-Transponder und ein RFID-Lesegerät;
- Fig. 4: den Schnitt von Fig. 3 mit einer alternativen Positionierung des RFID-Transponders und des RFID-Lesegeräts; und
- Fig. 5: eine Ansicht einer Planetenradachse mit darin angeordneten Sensoren und RFID-Transpondern und ein RFID-Lesegerät.

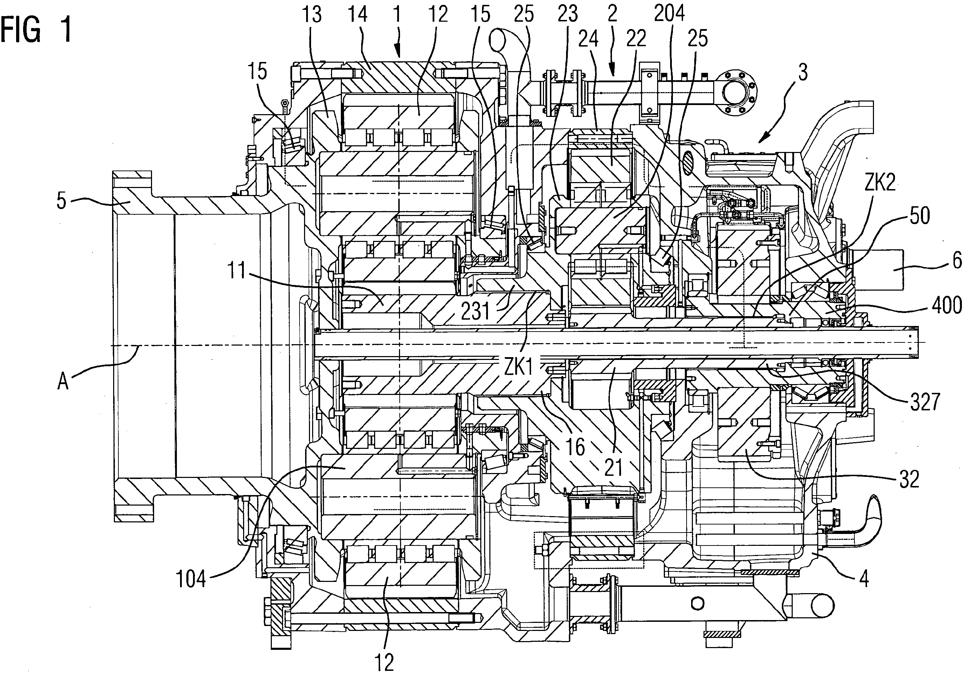

Fig. 1 zeigt einen Schnitt eines WKA-Getriebes, das eine rotorseitige erste Planetengetriebestufe 1, eine der ersten Planetengetriebestufe 1 nachgeschaltete, rotorabgewandte Planetengetriebestufe 2 sowie eine abtriebsseitige Stirnradstufe 3 mit zumindest einem Stirnrad 32 umfasst, die von einem gemeinsamen Getriebegehäuse 4 umgeben sind. Im Getriebegehäuse 4 sind eine mit einer Rotornabe verbindbare Antriebswelle 5 und eine mit einem Generator verbindbare Abtriebswelle 6 gelagert. Die Antriebswelle 5 ist mit einem Planetenträger 13 der rotorseitigen Planetenstufe 1 verbunden, während die Abtriebswelle 6 mit einem nicht dargestellten Stirnritzel der abtriebsseitigen Stirnradstufe 3 verbunden ist.

Die beiden Planetenstufen 1, 2 umfassen jeweils ein Hohlrad 14, 24, ein Sonnenrad 11, 21 und mehrere Planetenräder 12, 22, welche sowohl mit dem Hohlrad 14, 24 als auch mit dem Sonnenrad 11, 21 in Eingriff stehen. Die Planetenräder 12, 22 sind dabei mithilfe von Wälz- oder Gleitlagern auf Planetenradachsen 104, 204 drehbar gelagert, welche jeweils in einem Planetenträger 13, 23 fixiert sind.

Die Antriebswelle 5 ist dabei einstückig an den Planetenträger 13 der rotorseitigen Planetenstufe 1 angeformt. Eine mit dem Sonnenrad 11 der rotorseitigen Planetenstufe 1 drehfest verbundene Sonnenwelle 16 ist über eine Kurzverzahnungskupplung ZK1 mit dem Planetenträger 23 der zweiten Planetenstufe 2 verbunden. An den Planetenträger 23 der zweiten Planetenstufe 2 ist eine Hohlwelle 231 einstückig angeformt, die einen Endabschnitt der Sonnenwelle 16 der antriebsseitigen Planetenstufe 1 konzentrisch umgibt. Die Kurzverzahnungskupplung ZK1 zwischen den beiden Planetenstufen 1, 2 ist dabei durch eine Außenverzahnung an der Sonnenwelle 16 der antriebsseitigen Planetenstufe 1 und durch eine Innenverzahnung an der Hohlwelle 231 am Planetenträger 23 der zweiten Planetenstufe 2 gebildet.

Die Hohlräder 14, 24 können in das ein- oder mehrteilig ausgebildete Getriebegehäuse 4 integriert sein, welches auch Lagersitze für Lager 15, 25 des ersten und zweiten Planetenträgers 13, 23 aufweist. Die Lagersitze können beispielsweise in Gehäusedeckel integriert sein.

Die Stirnradstufe 3 umfasst ein Stirnrad 32 und eine Hohlwelle 400, die von dem Stirnrad 32 koaxial zu einer Getriebeachse A umgeben und mit diesem drehfest verbunden ist. Eine mit dem Sonnenrad 21 der zweiten Planetenstufe 2 drehfest verbundene Sonnenwelle 327 ist über eine Kurzverzahnungskupplung ZK2 mit der Hohlwelle 400 der Stirnradstufe 3 verbunden. Dabei berühren sich die Sonnenwelle 327 und die Hohlwelle 400 an Kontaktflächen 50.

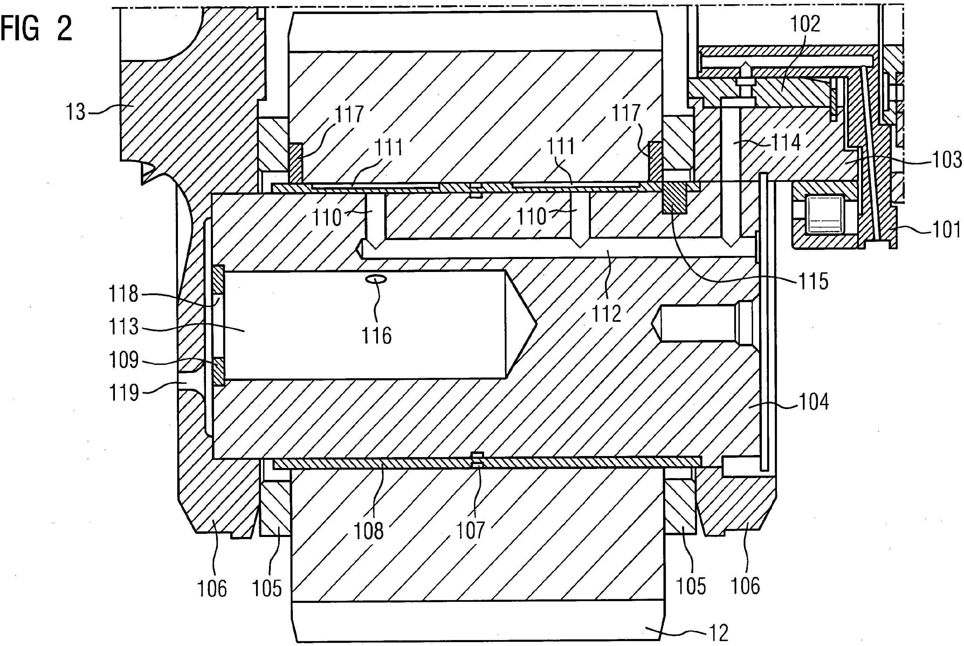

Fig. 2 zeigt einen Planetenträger 13 mit einem Planetenrad 12 für ein Planetengetriebe im Längsschnitt. Zur Lagerung des Planetenrads 12 sind mehrere Radialgleitlager vorgesehen, die jeweils eine Hülse 108 aus einem Gleitlagerwerkstoff umfassen. Entsprechend einer ersten Ausführungsvariante ist die Hülse 108 als Innenring auf einer Planetenradachse 104 befestigt. Ein zugehöriger Lageraußenring ist durch eine Bohrung des Planetenrades 12 aus einem Verzahnungswerkstoff gebildet.

Die Hülse 108 kann kraft-, form- oder stoffschlüssig mit der Planetenradachse 104 verbunden sein. Ist die Hülse 108 stoffschlüssig mit der Planetenradachse 104 verbunden, wird sie vorzugsweise durch eine Beschichtung der Planetenradachse 104 mit einem Gleitlagerwerkstoff gebildet. Bei einer kraftschlüssigen Verbindung kann eine zusätzliche Fixierung der Hülse 108 über einen oder mehrere Sicherungsstifte 115 erfolgen.

Die Planetenradachse 104 ist kraft- bzw. formschlüssig durch Planetenträgerwangen 106 fixiert und wird über ein nicht explizit dargestelltes beliebiges Sicherungselement gegen ein Verdrehen relativ zu dem Planetenträger 13 gesichert. Das Planetenrad 12 wird über zwei Axialgleitlager 105 axial geführt. Die beiden Axialgleitlager 105 sind wahlweise kraft- bzw. formschlüssig mit den Planetenträgerwangen 106 verbunden. Durch Stirnseiten des Planetenrads 12 werden entsprechend Gegenlaufflächen gebildet. Somit umfassen die Axialgleitlager zur Lagerung des Planetenrads 12 jeweils ein erstes Lagerelement aus einem Gleitlagerwerkstoff, der an einer Kontaktfläche zwischen einer Planetenträgerwange 106 und einer Stirnseite eines Planetenrades 12 entweder auf die Planetenträgerwange 106 oder auf die Stirnseite des Planetenrades 12 aufgebracht sein kann. Dementsprechend ist ein zugehöriges zweites Lagerelement entweder durch die Stirnseite des Planetenrads 12 oder durch die Planetenträgerwange 106 gebildet.

Zur Druckschmierung der Axial- und Radialgleitlager ist ein Ölverteilerring 102 vorgesehen, der eine Sonnenradachse radial umgibt. Der Ölverteilerring 102 weist eine Verbindung zu einem Ölzuführungskanal in einem Getriebegehäuse oder zu einem am Getriebegehäuse befestigten raumfesten Stator 101 auf. Im vorliegenden Ausführungsbeispiel ist der Ölverteilerring 102 radial zwischen dem Stator 101 und einem ringförmigen Vorsprung 103 des Planetenträgers 13 angeordnet. Darüber hinaus sind im Planetenträger 13 mehrere Ölverteilungskanalabschnitte 110, 112, 114 vorgesehen, die einerseits eine Verbindung zum Ölverteilerring 102 und andererseits eine Verbindung zu Schmierungsstellen für Planetenradlager aufweisen. Ein erster Ölverteilungskanalabschnitt 114 verläuft in einer Planetenträgerwange 106 und geht in einen zweiten Ölverteilungskanalabschnitt 112 über, der parallel zur Planetenradachse 104 verläuft. Zwischen dem zweiten Ölverteilungskanalabschnitt 112 und der Hülse 108 erstrecken sich zwei weitere Ölverteilungskanalabschnitte 110. Die beiden weiteren Ölverteilungskanalabschnitte 110 durchdringen dabei die Planetenradachse 104 und die Hülse 108. Die Hülse 108 weist in zumindest zwei Bereichen, in denen die weiteren Ölverteilungskanalabschnitte 110 enden, jeweils eine Schmierstoffsammelvorrichtung 111 auf. Die Schmierstoffsammelvorrichtungen 111 sind durch Aussparungen an der Hülse 108 gebildet. Zwischen den beiden Schmierstoffsammelvorrichtungen 111 weist die Hülse 108 eine umlaufende Schmierstoffversorgungsnut 107 auf.

An den Stirnseiten des Planetenrads 12 sind zur Sicherstellung eines ausreichenden Schmierfilms im jeweiligen Radialgleitlager Staukanten 117 vorgesehen. Die Staukanten 117 können im Bereich der Bohrungen an das Planetenrad 12 oder in Umfangsrichtung an die Planetenradachsen 104 angeformt sein.

Zur Tauchschmierung der Axial- und Radialgleitlager ist eine Bohrung 113 in der Planetenradachse 104 vorgesehen, die ein durch Eintauchen der Planetenradachse 104 in einen Ölsumpf füllbares Ölreservoir bildet. Dazu weist die Planetenradachse 104 zumindest eine vom Ölreservoir ausgehende, sich radial erstreckende Bohrung 116 auf, die an der Hülse 108 endet. In diesem Bereich ist an der Hülse 108 außerdem eine Schmierstoffsammeltasche vorgesehen, die durch eine Aussparung an der Hülse 108 gebildet ist. Damit zur Tauchschmierung verwendetes Öl nach einem Austritt der Planetenradachse 104 aus einem Ölsumpf im Ölreservoir gehalten wird, ist am Planetenträger 13 oder in der Planetenradachse 104 eine Staukante 109 bzw. ein Staublech vorgesehen. Durch die Staukante 109 wird der Durchmesser der Bohrung 113 für das Ölreservoir abschnittsweise verringert. Die Staukante umgibt ein Füllloch 118, durch welches Öl aus dem Ölsumpf in die Ölreservoir-Bohrung 113 einströmen kann. Um ein Einströmen von Öl in die Ölreservoir-Bohrung 113 zu ermöglichen, weist auch der Planetenträger 13 im Bereich der Planetenträgerwange 106 eine Durchflussbohrung 119 auf, welche mit dem Füllloch 118 in Verbindung steht. Auf diese Weise kann im Ölsumpf vorrätiges Öl durch die Durchflussbohrung 119 der Planetenträgerwange 106 und das Füllloch 118 der Planetenradachse 104 in die Ölreservoir-Bohrung 113 einströmen.

Bei der Tauchschmierung für den belastungsfreien Betrieb des Getriebes werden die Gleitlager über das Ölreservoir 113 in der Planetenradachse 104 mit Öl versorgt. Das Ölreservoir 113 wird durch das Eintauchen der Planetenradachse 104 in den Ölsumpf mit Öl gefüllt und leitet dieses Öl an das Gleitlager 108 weiter. Die Ölzufuhr erfolgt ca. 110° vor dem Maximum der Belastungszone des Lagers 108. Durch die Ölverteilungskanalabschnitte 110, 112, 114 des Druckschmierungssystems wird ein Ablauf des Öls sichergestellt.

Zusätzlich dient das Ölreservoir 113 der Ölspeicherung für den belastungsfreien Betrieb des Getriebes. Die Radialgleitlager 108 sind mit Ölstaukanten 117 an den Stirnseiten der Planetenräder 12 ausgerüstet, so dass immer ein definierter Ölstand im Radialgleitlager 108 verbleibt. Damit ist eine Schmierung der Radialgleitlager 108 im belastungsfreien Zustand gewährleistet.

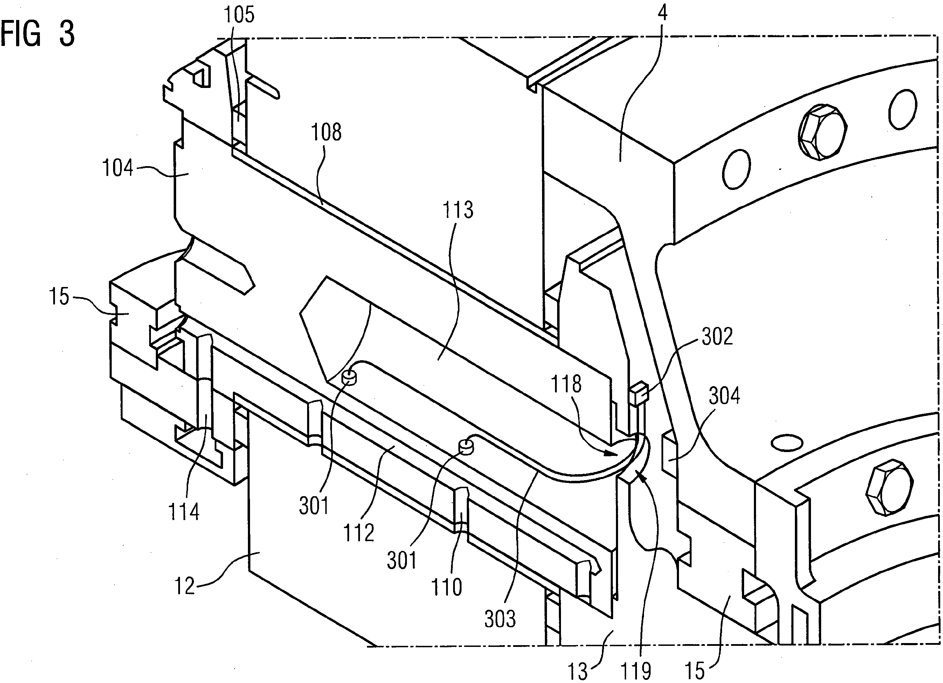

Fig. 3 zeigt einen Schnitt durch eine in einem Planetenträger 13 nicht-rotierbar fixierte Planetenradachse 104 mit darin angeordneten Sensoren 301, die über Übertragungsleitungen 303 mit einem an einem Planetenträger 13 angeordneten RFID-Transponder 302 verbunden sind.

Die Planetenradachse 104 umfasst, wie bereits in Fig. 2 gezeigt, Ölverteilungskanalabschnitte 110, 112, 114 zur Druckschmierung des Radial-Gleitlagers 108 und der Axial-Gleitlager 105, über welche ein Planetenrad 12 auf der Planetenradachse 104 drehbar gelagert ist. Zusätzlich weist die Planetenradachse 104, wie ebenfalls bereits in Fig. 2 gezeigt, eine axiale Bohrung 113 auf, die bei einer Tauchschmierung als ein Ölreservoir dient. Wie bereits in Fig. 2 gezeigt, weist die Planetengetriebestufe eine Durchflussbohrung 119 in der Planetenträgerwange 106 und ein Füllloch 118 in der Planetenradachse 104 auf, so dass in einem Ölsumpf vorrätiges Öl durch die Durchflussbohrung 119 der Planetenträgerwange 106 und das Füllloch 118 der Planetenradachse 104 in die Ölreservoir-Bohrung 113 einströmen kann.

Quer zur Achse der Ölreservoir-Bohrung 113 verlaufend sind zwei Querbohrungen in der Planetenradachse 104 angeordnet, welche eine Verbindung vom Ölreservoir 113 zu dem RadialGleitlager 108 schaffen; in diese Querbohrungen ist jeweils ein Sensor 301 eingesetzt. Diese Sensoren, z.B. in Form von Thermoelementen, messen Temperaturen des benachbarten Radial-Gleitlagers 108. Die von den Sensoren 301 erfassten Temperatur-Messwerte können über Datenleitungen 303, die jeweils von den Sensoren 301 durch die Ölreservoir-Bohrung 113, das Füllloch 118 und die Durchflussbohrung 119 zu einem an einem Planetenträger 13 angeordneten RFID-Transponder 302 verläuft, von den Sensoren 301 zu dem RFID-Transponder 302 übertragen werden.

Der Planetenträger 13 ist durch Lager 15, d.h. Wälz- oder Gleitlager, gegenüber dem Getriebegehäuse 4 drehbar gelagert. Am feststehenden Getriebegehäuse 4 ist ein RFID-Lesegerät 304 so angeordnet, dass der am Planetenträger 13 angeordnete RFID-Transponder 302 bei einer Rotation des Planetenträgers 13 in unmittelbarer Nähe am RFID-Lesegerät 304 vorbei geführt wird.

Dabei bewegt sich der Transponder 302 auf einer kreisförmigen Umlaufbahn periodisch an dem stationären Lesegerät 304 vorbei. Dabei ist eine gewisse Verweildauer des Transponders 302 im Feld des Lesegeräts 304 erforderlich, z.B. im Bereich von 50 bis 100 ms, um einen vollständigen Abfragezyklus der Temperatur der Sensoren zu durchlaufen. Bei einer maximalen tangentialen Transpondergeschwindigkeit im Bereich von 4,5 m/s sind Antennenabmessungen von Transponder 302 und Lesegerät 304 im Bereich von 5 bis 50 cm nötig und realisierbar.

Der Planetenträger weist eine maximale Rotationsgeschwindigkeit im Bereich von 4,5 m/s auf, entsprechend einer Drehzahl von 42 Umdrehungen pro Minute. Dabei ist es möglich, dass Spritzöl an das Lesegerät 304 gelangt und der Transponder 302 sowie die Sensoren 301 in den Ölsumpf des Getriebes eintauchen. Die Sensoren 301 und die RFID-Geräte 302, 304 sind so ausgelegt, dass sie durch das Umgebungsmedium Getriebeöl nicht geschädigt werden. Dabei wird durch das Lesegerät 304 pro Umdrehung einmal ein Signal vom Transponder 302 ausgelesen.

Auf diese Weise ist ein Auslesen des RFID-Transponders 302 durch das Lesegerät 204 zumindest einmal während einer Rotation des Planetenträgers mit der darin fixierten Planetenradachse 104 möglich.

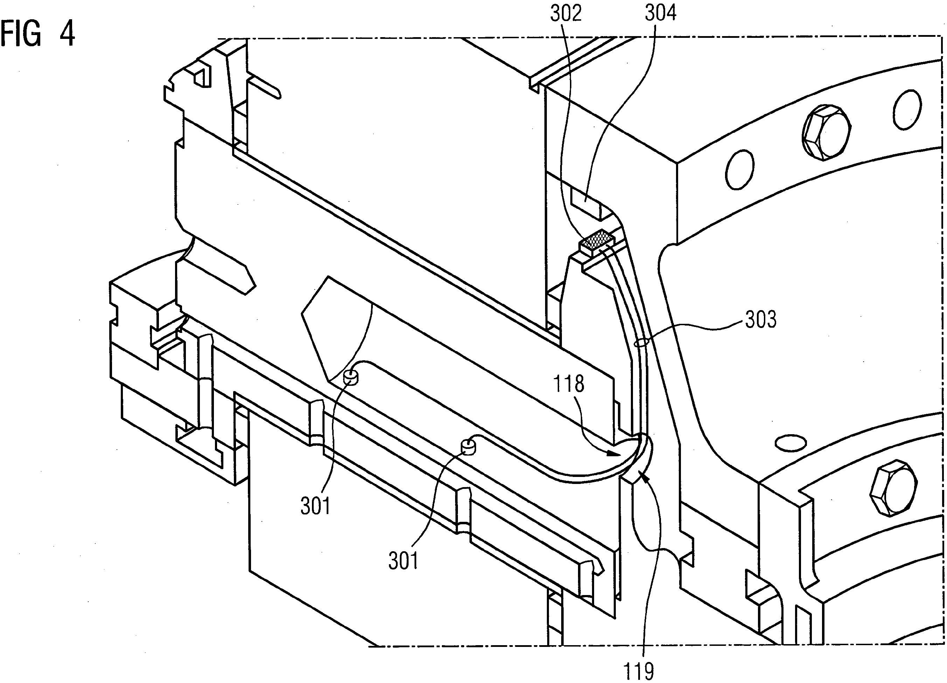

Fig. 4 zeigt denselben Schnitt wie Fig. 3 durch eine in einem Planetenträger 13 nicht-rotierbar fixierte Planetenradachse 104. Der einzige Unterschied zu der in Fig. 3 gezeigten Ausgestaltung liegt in der veränderten Position des RFID-Transponders 302 und des RFID-Lesegeräts 304. Während in Fig. 3 Transponder 302 und Lesegerät 304 im Moment des kleinsten relativen Abstands axial zueinander positioniert sind, sind in Fig. 4 Transponder 302 und Lesegerät 304 im Moment des kleinsten relativen Abstands radial zueinander positioniert.

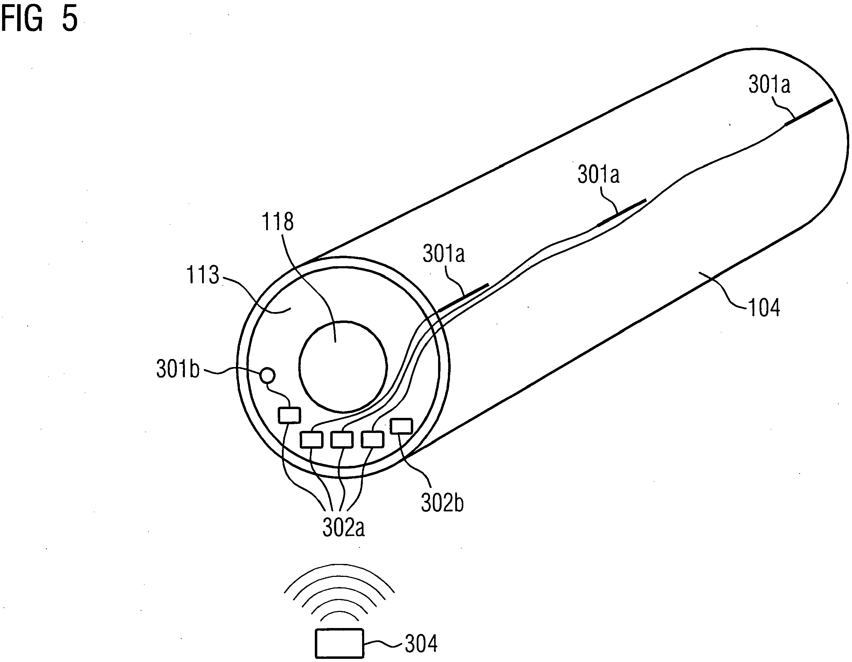

Fig. 5 zeigt eine Ansicht einer Planetenradachse 104 mit darin angeordneten Sensoren 301a, 301b und RFID-Transpondern 302, sowie einem den RFID-Transpondern 302 zugeordneten RFID-Lesegerät 304. Die aus Stahl gefertigte Planetenradachse 104, die in einem nicht dargestellten rotierbaren Planetenträger fixiert ist, weist eine axial verlaufende Ölreservoir-Bohrung 113 auf, die an einer Stirnseite der Planetenradachse 104 durch ein Füllloch 118 zugänglich ist. An der Innenwand der Ölreservoir-Bohrung 113 sind drei als Mantelthermoelemente Typ K ausgebildete Temperatursensoren 301a angeordnet, z.B. geklebt. An der das Füllloch 118 aufweisenden Stirnseite der Planetenradachse 104 ist ein Schallemissionssensor 301b angebracht. Die Temperatursensoren 301a und der Schallemissionssensor 301b sind jeweils über Kabelleitungen mit RFID-Transpondern 302a verbunden. Ein weiterer an der Innenseite der Ölreservoir-Bohrung 113 angeordneter RFID-Transponder 302b umfasst eine Temperatursensor-Funktion. Ein außerhalb der Planetenradachse 104 angeordnetes Lesegerät 304 liest die RFID-Transponder 302a, 302b aus. Die Auslese erfolgt bei jeder Rotation des die Planetenradachse 104 tragenden Planetenträgers. Sobald die RFID-Transponder 302a, 302b während einer Rotation des Planetenträgers in einen für einen Auslesevorgang ausreichenden Abstand zu dem Lesegerät 304 gelangen, entziehen die passiven RFID-Transponder 302a, 302b dem Feld des Lesegeräts 304 Energie, die für den Auslesevorgang der Sensoren und die Übertragung der Sensor-Messwerte von den Sensoren zu den RFID-Transponder 302a, 302b genutzt wird. Mithilfe der von dem Lesegerät 304 empfangenen Energie sind die RFID-Transponder 302a, 302b in der Lage, Informationen an das Lesegerät 304 zu senden.

Die Anwendung der vorliegenden Erfindung ist nicht auf die hier beschriebenen Ausführungsbeispiele beschränkt.

## Patentansprüche

1. Windgetriebe, umfassend mindestens ein rotierbares Bauteil (13, 104), wobei an dem rotierbaren Bauteil (13, 104) mindestens ein Sensor (301) zur Erfassung von Sensormessdaten sowie ein RFID-Transponder (302) angeordnet sind, und wobei der Sensor (301) durch eine Übertragungsleitung (303) zur Übertragung von Sensormessdaten mit dem RFID-Transponder (302) verbunden ist.

2. Windgetriebe nach Anspruch 1, wobei die Sensormessdaten eine Temperatur und/oder eine Geschwindigkeit und/oder eine Beschleunigung und/oder eine Dehnung und/oder eine Distanz und/oder einen Körperschall und/oder einen Ultraschall umfassen.

3. Windgetriebe nach Anspruch 1 oder 2, umfassend ein dem RFID-Transponder (302) zugeordnetes Lesegerät (304), welches so an einem feststehenden Bauteil (4) des Windgetriebes angeordnet ist, dass ein Auslesen von Sensormessdaten aus dem RFID-Transponder (302) durch das Lesegerät (304) zumindest einmal während einer Rotation des rotierbares Bauteil (13, 104) möglich ist.

4. Windgetriebe nach einem der vorhergehenden Ansprüche, wobei das Windgetriebe ein Planetengetriebe ist und das rotierbare Bauteil (13, 104) ein Planetenträger (13) des Planetengetriebes mit einer darin angeordneten Planetenradachse (104) ist, wobei auf der Planetenradachse (104) ein Planetenrad (12) rotierbar gelagert ist.

5. Windgetriebe nach Anspruch 4, wobei das Windgetriebe zwei oder mehr Planetengetriebestufen (1, 2) aufweist und das rotierbare Bauteil (23, 204) ein Planetenträger (23) mit einer darin angeordneten Planetenradachse (204) einer rotorabgewandten Planetengetriebestufe (2) ist.

6. Windgetriebe nach Anspruch 4 oder 5, wobei der Sensor (301) in einer in der Planetenradachse (104) eingebrachten Bohrung (113) angeordnet ist, welche zur Tauchschmierung der Lager (108) des auf der Planetenradachse (104) gelagerten Planetenrads (12) vorgesehen ist und ein durch Eintauchen der Planetenradachse (104) in einen Ölsumpf füllbares Ölreservoir bildet.

7. Windgetriebe nach einem der Ansprüche 4 bis 6, wobei der Transponder (302) an dem Planetenträger (13) angeordnet ist, in dem die besagte Planetenradachse (104) fixiert ist.

8. Windgetriebe nach Anspruch 7, wobei das Lesegerät (304) an dem Getriebegehäuse (4) angeordnet ist, so dass bei einer Rotation des Planetenträgers (13) der Transponder (302) an dem Lesegerät (304) vorbeigeführt wird.

9. Windgetriebe nach einem der vorhergehenden Ansprüche, wobei der RFID-Transponder (302) ein passiver RFID-Transponder ist.

10. Verwendung einer RFID-Schnittstelle (302, 304) zur Übertragung von Sensormessdaten von einem rotierenden Bauteil (13, 104) zu einem feststehenden Bauteil (4) eines Windgetriebes.

11. Verfahren zur Übertragung von Sensormessdaten von einem rotierenden Bauteil (13, 104) zu einem feststehenden Bauteil (4) eines Windgetriebes, vorzugsweise eines Planetengetriebes, wobei die Daten von einem an dem rotierenden Bauteil (13, 104) angeordneten Sensor erfasst werden, von dort über eine Übertragungsleitung (303) zu einem an dem rotierenden Bauteil (13, 104) angeordneten RFID-Transponder (302) übertragen werden und von dem RFID-Transponder (302) zu einem an dem feststehenden Bauteil (4) angeordneten Lesegerät (304) übertragen werden.

12. Verfahren nach Anspruch 11, wobei der in einer an einem Planetenträger (13) fixierten Planetenradachse (104) angeordnete Sensor (301) die Daten in Bezug auf ein Lager (108) erfasst, welches zur Lagerung eines Planetenrades (12) auf der Planetenradachse (104) vorgesehen ist, die Daten von dem Sensor (301) zu dem an dem Planetenträger (13) angeordneten RFID-Transponder (302) und von dort zu dem an einem Getriebegehäuse (4) angeordneten Lesegerät (304) übertragen werden.
